# EUROPEAN PATENT SPECIFICATION

(11) **EP 3 685 899 B1**
(45) Date of publication and mention of the grant of the patent: **21.12.2022**
(21) Application number: 19305089.5
(22) Date of filing: 23.01.2019
(51) Int. Cl.: B01D 35/02, B01D 35/027, B01D 35/18, B01D 29/60

(54) **SUCTION TUBE FILTER ARRANGEMENT AND FLUID TANK SYSTEM FOR A FLUID TANK**
SAUGROHRFILTERANORDNUNG UND FLÜSSIGKEITSTANKSYSTEM FÜR EINEN FLÜSSIGKEITSTANK
AGENCEMENT DE FILTRE DE TUBE D'ASPIRATION ET SYSTÈME DE RÉSERVOIR DE FLUIDE POUR RÉSERVOIR DE FLUIDE

(43) Date of publication of application: 29.07.2020
(73) Proprietor: TE Connectivity Norge AS, 5258 Blomsterdalen (NO); MEAS France, 31027 Toulouse Cedex 3 (FR)
(72) Inventor: Ziemak, Macieji, 55-010 Kotowice (PL); Chebbi, Girish, 5239 Rådal (NO); Ruiz, Rafael Ferrer, 31200 Toulouse (FR)
(74) Representative: Grünecker Patent- und Rechtsanwälte PartG mbB

(56) References cited:
- EP-A1- 1 925 354
- EP-A1- 3 276 331
- US-A- 4 411 788
- US-A- 5 409 608
- US-A- 5 776 341
- US-A1- 2017 189 837
- US-B1- 6 488 846

## Description

The invention relates to a suction tube filter arrangement for a fluid tank, in particular for a tank containing urea solution. The invention further relates to a fluid tank system, in particular for a tank containing urea solution, wherein the fluid tank system comprises at least one heating coil and at least one suction tube filter arrangement.

Suction tubes are used for the suction of fluid from a fluid tank. In order to prevent debris and/or frozen solution from entering the suction tube, a suction tube may be provided with a filter member that allows only solution to enter the suction tube. Generally, a filter member is arranged at a lower end of the suction tube in order to protect an inlet opening of the suction tube.

From US 2017/189837 A1, a sock-shaped bag filter for a urea solution tank is known. The bag filter surrounds a heating coil, a suction tube and a sensor rod. The bag filter is supported by support structures and the heating coil itself. The support structures and the heating coil extend circumferentially around the suction tube and are spaced apart from the same. A filter for a gasoline tank is known from US 4,411,788 A. The filter comprises a skeleton formed by a bottom plate, four support columns and an annular reinforcing frame. To the skeleton, a cylindrical net as filter member is attached in a manner that it is thereby spaced apart from the suction tube. From US 5,409,608 A, a filter for an in-tank pump of an automobile fuel tank is known. The filter comprises an outer mesh member that is supported by a skeleton made from ribs. Inside the skeleton, a suction nozzle is arranged that comprises a mesh cylinder for fuel intake.

The drawbacks of the known arrangements are that gas bubbles from inside the filter member may enter the suction tube together with solution and that the known arrangements are often cost-intensive to produce and/or to service.

It is therefore an object of the invention to improve a suction tube filter arrangement and a fluid tank system.

This object is achieved by a suction tube filter arrangement according to the invention which comprises at least one suction tube that defines a suction tube direction, and at least one filter member, wherein the suction tube is at least partially arranged inside the filter member and the filter member extends along the suction tube direction, wherein the at least one suction tube forms a support structure for the at least one filter member, the filter member being expanded by the suction tube, and wherein the filter member without suction tube is a flat body that gets expanded by the suction tube, forming an overall lens-shaped cross section perpendicular to a longitudinal direction, the longitudinal direction being defined by the suction tube direction, wherein the at least one suction tube is provided with at least one monolithically integrated fixation means for undetachably fixating the filter member on the suction tube and with at least one connection port for connecting the arrangement with a counter connection port of a fluid tank system, and wherein the suction tube together with the at least one monolithically integrated fixation means and the at least one connection port is formed as a single piece from a plastic material.

The fluid tank system according to the invention is provided with a suction tube filter arrangement according to the invention, wherein said arrangement is arranged inside a space which is surrounded by the at least one heating coil.

Due to the arrangement according to the invention, at least a part of the suction tube is arranged inside a filter member that extends along the suction tube direction. The filter member extending along the suction may allow gas bubbles to ascend inside the filter member away from an inlet opening of the suction tube such that suction of gas bubbles may be prevented. Furthermore, a compact arrangement can be achieved.

By arranging at least a part, preferably the greater part, of the suction tube filter arrangement inside the space which is surrounded by the at least one heating coil, the fluid tank system according to the invention may prevent frozen solution from blocking the suction tube. If frozen solution is present inside a fluid tank, the solution inside the space which is surrounded by the heating coil is generally heated up earlier than the solution outside said space. Consequently, frozen solution inside said space will melt earlier than the solution outside said space. Due to this arrangement, the solution can be pumped from the tank even when there is still frozen solution present in the tank. The invention is in particular intended to be used for tanks containing diesel exhaust fluid (DEF) for cleaning diesel exhaust emissions. The suction tube may be a part of a DEF-dosing system. The fluid tank system according to the invention may be such a DEF-dosing system or a part thereof. The suction tube filter arrangement according to the invention may also be used in fluid tank systems, in particular in DEF-dosing systems without a heating coil. This may for example be the case in regions where there is no risk of freezing the solution.

The suction tube forms a support structure for the filter member. In other words, the at least one filter member is at least partially supported by the at least one suction tube. Thereby, a simple structure can be achieved. The filter member is expanded by the suction tube. The filter member may in particular, be expanded in a depth direction of the filter member.

In the following, further improvements of the invention are described. The additional improvements may be combined independently of each other, depending on whether a particular advantage of a particular improvement is needed in a specific application. It should be noted that the method according to the invention may in particular be performed with a system according to the invention.

According to a first advantageous embodiment of the invention, the suction tube and the filter member are both elongated along the suction tube direction. This elongated shape may increase the tendency of gas bubbles to ascend inside the filter member away from an inlet opening of the suction tube. Furthermore, the elongated shape of the filter member may provide a large surface which the solution may pass to the suction tube. Thereby, a flow rate of the solution may be increased. An inlet opening of the suction tube is preferably arranged inside the filter member.

The suction tube and the filter member may form a unit that can easily be replaced in a fluid tank system.

A length of the suction tube filter arrangement may be adjustable in order to meet different filter specifications. In other words, the length of the suction tube and/or the filter member may be chosen depending on the intended application.

An inner volume may be opened up by an expanded filter member, wherein the at least one inner volume may extend between an outer wall of the suction tube and the filter member, said fluid volume extending along the suction tube direction and being in fluid communication with an inlet opening of the suction tube. In other words, the inner volume may extend in the vicinity of the inlet opening and also along a vertical direction upwards from said inlet opening. Thereby, gas bubbles may easily ascend away from the inlet opening. The filter member is a basically flat body that gets expanded by the suction tube, forming an overall lens-shaped cross section.

The at least one suction tube is provided with at least one monolithically integrated fixation means for undetachably fixating the filter member on the suction tube. The at least one fixation means is preferably formed as a flange on the suction tube to which the at least one filter member is attachable. Due to the monolithically integrated fixation means, the number of parts of the arrangement may be reduced.

In order to further reduce the number of parts and to keep a simple structure, the at least one suction tube is provided with at least one connection port for connecting the arrangement with a counter connection port of a fluid tank system. The connection port is formed monolithically with the suction tube.

The at least one suction tube is made from a plastic material. Thereby, the costs may be reduced, in particular in comparison with a suction tube made from steel. The suction tube is provided with a fixation means and a connection port and all the elements are formed monolithically with the suction tube from plastic. Thereby, the suction tube together with the fixation means and the connection port are formed as a single piece.

In order to provide an effective but cost efficient filter member, the at least one filter member is preferably made from fabric, in particular from woven fibers.

An inlet port of the suction tube is preferably arranged at a bottom of the filter member. As already mentioned above, the upper part of the filter member may allow the solution to enter the filter member. The solution may then flow inside the filter member to its bottom and enter the inlet opening of the suction tube.

The filter member and the suction tube according to the invention are preferably assembled to a unit that can be sold separately, in particular as a replacement part. Due to the suction tube filter arrangement comprising a suction tube, the system sided suction tube of a fluid tank system may have a reduced length. Since those system sided suction tubes are generally made from steel, the costs of the overall system may be reduced.

According to the invention, a set of suction tube filter arrangements having different lengths can be provided. These suction tube filter arrangements may be interchangeable in order to meet different requirements of a fluid tank system.

The fluid tank system according to the invention may further be improved in that an inlet port of the at least one suction tube is arranged inside the space which is surrounded by the at least one heating coil. Thereby, it can be achieved that only liquid solution enters the suction tube.

In order to facilitate the removal of gas bubbles from the inlet opening of the suction tube, the at least one filter member and preferably also the suction tube extend basically parallel to a gas-bubble ascension direction. Said gas-bubble ascension direction is parallel with a gravity direction.

In order to allow an easy installation and/or replacement of a suction tube filter arrangement, the fluid tank system preferably further comprises at least one counter connection port to which the suction tube filter arrangement can be undetachably connected. The counter connection port may be provided with at least one sealing ring, preferably an o-ring. Said sealing ring is preferably arranged on an outer side of a system sided suction tube that may form a part of the counter connection port. Said sealing ring may abut a connection port of the suction tube of the suction tube filter arrangement in order to form a gas tight connection.

The fluid tank system may further comprise at least one jig for mounting a sealing ring on the system sided suction tube. The jig may be sold together with a suction tube filter arrangement or a fluid tank system according to the invention.

Preferably, the fluid tank system further comprises at least one fluid sensor arrangement, wherein the suction tube filter arrangement is arranged side-by-side to the at least one fluid sensor arrangement, in particular in a direction perpendicular to a gas-bubble ascension direction. The fluid sensor arrangement is preferably a quality sensor and/or a fluid level sensor. The side-by-side arrangement may provide a compact structure.

Preferably, an inlet port of the suction tube is arranged on a level with the at least one fluid sensor arrangement along a gas-bubble ascension direction. Due to this arrangement, the properties measured by the sensor arrangement reflect the properties of the solution that enters the suction tube.

The at least one fluid sensor arrangement is preferably provided with a bottom plate that basically closes the space which is surrounded by the at least one heating coil, wherein the bottom plate is provided with at least one cutout for the at least one suction tube filter arrangement. Thereby, a compact structure can be achieved.

In the following, the invention and its improvements are described in detail using an exemplary embodiment and with reference to the figures. As described above, the various features shown in the embodiments may be used independently of one another in specific applications.
- Figs. 1 to 3: show schematic drawings of a suction tube filter arrangement according to the invention from different perspectives;
- Figs. 4 to 6: show schematic drawings of a fluid tank system according to the invention from different perspectives, wherein the system is provided with an arrangement as shown in Figs 1 to 3; and
- Figs. 7 to 10: show schematic drawings of the installation of a sealing ring on a system sided suction tube of the fluid tank system shown in Figs. 4 to 6.

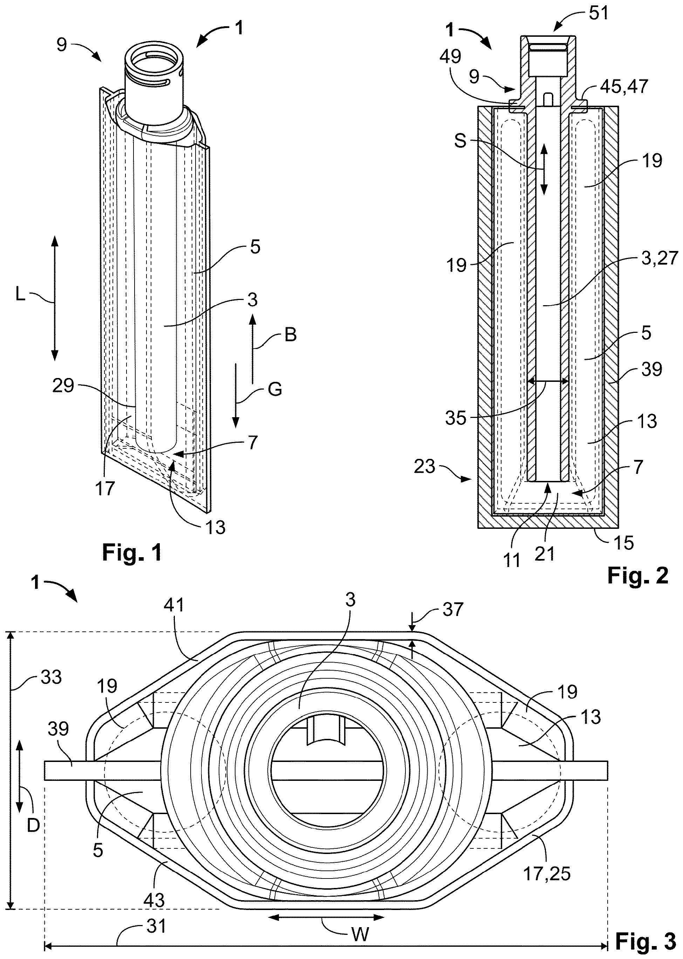

In the following, a suction tube filter arrangement 1 (in the following denoted as "arrangement 1") is described with respect to Figs. 1 to 3. A fluid tank system which is provided with the arrangement 1 will be described later on.

The arrangement 1 comprises a suction tube 3 and a filter member 5. The suction tube 3 may be used for the suction of a solution from a tank (not shown). The filter member 5 may prevent debris and/or frozen solutions from entering the suction tube 3.

Both the suction tube 3 and the filter member 5 have overall elongated shapes. The suction tube 3 defines a suction tube direction S. This suction tube direction S defines a longitudinal direction L of the arrangement 1. The filter member 5 extends along the suction tube direction S and thereby parallel with the longitudinal direction L of the arrangement. When the arrangement 1 is arranged inside a fluid tank system, the longitudinal direction L of the arrangement 1 is preferably aligned parallel with a gas bubble ascension direction B that is parallel with the gravitational direction G but orientated in the opposing direction. The gas bubble ascension direction B is the direction along which gas bubbles may ascend from the solution in the tank.

The suction tube 3 is basically arranged inside the filter member 5. In other words, the greater part of the suction tube 3 is arranged inside the filter member 5 such that it is surrounded by the filter member 5.

The suction tube 3 comprises a suction end 7 and a connection end 9, wherein the ends 7 and 9 are arranged opposing each other along the suction tube direction S. In a preferred alignment of the arrangement 1, the suction end 7 forms the lower end of the suction tube 3 and the connection end 9 forms the upper end of the suction tube 3.

At the suction end 7, the suction tube 3 has an inlet opening 11 which opens the suction tube 3 to its surrounding and which allows a solution to enter the suction tube 3. The inlet opening 11 is arranged inside the filter member 5.

An inner volume 13 extends inside the filter member 5 and is basically arranged between the suction tube 3 and the material of the filter member 5. Said inner volume 13 is in fluid communication with the inlet opening 11 of the suction tube 3. The inner volume 13 extends between the suction end 7 and the lower end 15 of the filter member 5. The lower end 15 is that end of the filter member 5 which is arranged along the longitudinal direction L closer to the suction end 7 than to the connection end 9 of the suction tube 3.

The inner volume 13 further extends parallel to the longitudinal direction L through the filter member 5 adjacent to the suction tube 3. Preferably, the inner volume 13 extends basically along the greater part of a length of the filter member 5 along the longitudinal direction L. Thereby, most of the material 17 of the filter can be used by a solution to enter the inner volume 13 through the filter member 5 and reach the inlet opening 11 of the suction tube 3.

In the embodiment shown in the figures, the inner volume 13, which is indicated by the dashed line in Fig. 2, is basically composed of two vertical strands 19 which longitudinally extend parallel to the longitudinal direction L, and a horizontal strand 21 which is closest to the inlet opening 11. The vertical strands 19 and the horizontal strand 21 basically form a U-shaped structured inner volume 13.

The inlet opening 11 is arranged at the bottom 23 of the filter member 5, said bottom being located at the lower end 15 of the filter member 5.

The inner volume 13 has the benefit that the bulk of the material 17 can be used for a solution to enter the filter member 5 and to flow through the inner volume 13 towards and into the inlet opening 11. Thereby, the effective area that is used for a solution to pass the filter member 5 is increased in comparison to a filter member that covers only the inlet opening 11.

Furthermore, the vertical strands 19 may allow gas bubbles in the solution inside the inner volume 13 to ascend along the gas bubble ascension direction B along the vertical strands 19 and away from the inlet opening 11. Thereby, the suction of gas bubbles into the suction tube 3 may be prevented.

The filter member 5 without the suction tube 3 may be an overall flat body. The material 17 of the filter member 5 is preferably a fabric 25, preferably a woven material. More preferably, the filter member 5 is made from a woven fiber structure.

The suction tube 3 preferably serves as a support structure 27 for the filter member 5. In other words, the suction tube 3 may expand the material 17 of the filter member 5, thereby defining the structure of the filter member 5 and the outer shape of the arrangement 1.

In a cross-section perpendicular to the longitudinal direction L, the filter member 5 may be expanded to an overall lens-shape. This shape can be seen in Fig. 3. Thereby, two opposing sections 29 of the suction tube 3 abut the material 17 of the filter member 5, expanding the filter member 5 along a depth direction D.

Perpendicular to said depth direction D and the longitudinal direction L, the filter member 5 extends along a width direction W. A width 31 of the filter member 5, measured along the width direction W, is larger than a depth 33 of the filter member 5, measured along the depth direction D.

Since the suction tube 3 expands the filter member 5 parallel with the depth direction D, the depth 33 is composed of an outer diameter 35 of the suction tube 3 and two times the material thickness 37 of the material 17. Due to the width 31 being larger than the depth D, the lateral strands 19 of the inner volume 13 are opened up inside the filter member 5.

The filter member 5 comprises a seam 39. Said seam 39 joining at least two parts 41, 43 of the filter material 17 in order to form the filter member 5. Preferably the parts 41 and 43 are two halves of a single piece of fabric. The piece of fabric may be folded in order to form the filter member 5. The seam forms the margin of the filter member 5, at least at the lower end 15 and at the two sides which are opposed to each other along the width direction W.

It should be noted that the above-described arrangement, in which the suction tube 3 itself forms a support structure 27 for the filter member 5, is only a preferred embodiment. In the alternative, the filter member 5 could also be pre-shaped in order to receive the suction tube 3. In another embodiment, the suction tube 3 could be provided with an additional support structure in order to define the shape of the filter member 5. Said additional support structure could in particular be monolithically formed with the suction tube 3. As another alternative, the filter member 5 could be provided with an inner support structure, for example made from plastic, said support structure expanding the filter member 5 to a required shape.

In order to fixate the filter member 5 on the suction tube 3, the suction tube 3 preferably comprises at least one fixation means 45, to which the filter member 5 can be undetachably fixated. Said fixation means 45 is preferably formed monolithically with the remaining suction tube 3.

In a preferred embodiment, the fixation means 45 is shaped as a flange 47. Said flange 47 may be provided with a circumferential groove 49 into which material 17 of the filter member 5 can be inserted to fixate the filter member 5 on the suction tube 3. The fixation means 45 is preferably arranged at the connection end 9 of the suction tube 3.

The suction tube 3 is preferably further provided with at least one connection port 51. The connection port 51 can be used for connecting the arrangement 1 with a counter connection port of a fluid tank system. The connection port 51 is adapted for establishing a fluid communication between the suction tube 3 and further parts of a fluid tank system, in particular a fluid pump. The connection port 51 may further mechanically mount the arrangement 1 in the fluid tank system.

The suction tube 3 is preferably made from plastic material. If the suction tube 3 is provided with a fixation means 45 for the filter member 5 and/or with a connection port 51, these features are preferably formed integrally with the remaining suction tube 3. In other words, the suction tube 3, the fixation means 45 and/or the connection port 51 are preferably monolithically formed from plastic.

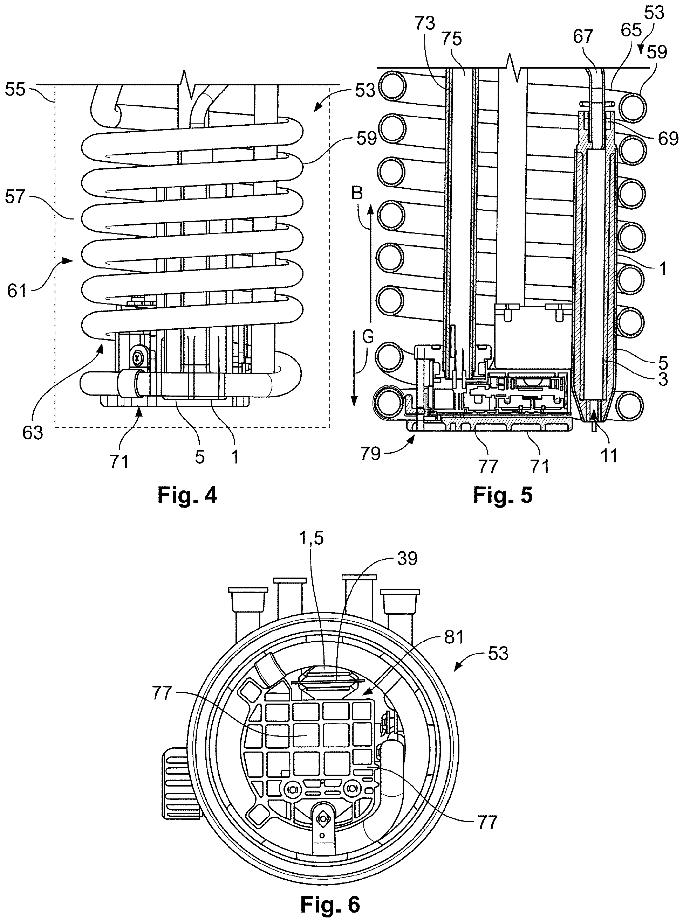

In the following, a fluid tank system 53 according to the invention is described with respect to Figs. 4 to 6. Thereby, Fig. 4 shows a side view of the system 53, Fig. 5 shows a cut through the system 53 showing the interior of the same, and Fig. 6 shows a view of the system 53 from below the system 53.

The fluid tank system 53 is provided with an arrangement 1 as described above with respect to Figs. 1 to 3.

The fluid tank system 53 may be arranged inside a fluid tank 55, in particular a fluid tank 55 for urea solution 57. The solution may be used for cleaning diesel exhaust fumes. A fluid tank 55 is only indicated by a dashed line in Fig. 4.

The fluid tank system 53 comprises a heating coil 59 and an arrangement 1 as described above. The heating coil 59 is intended to heat a solution 57 inside a tank 55 to a working temperature. In particular, the heating coil 59 may be used for melting a frozen solution 57. The heating coil 53 is preferably arranged in a helical structure 61, said helical structure 61 surrounding a space 63.

In the space 63 that is surrounded by the heating coil 59, at least the bulk of the arrangement 1 is located. When the solution 57, which is arranged inside the space 63, is frozen, it is generally heated up earlier than the solution outside the heating coil 59. Consequently, the solution 57 can enter the filter member 5 and thereby the inlet opening 11 of the suction tube 3 even when there is still frozen solution 57 present in the tank 55. This is advantageous over systems in which a suction tube extends outside the heating coil 59 and wherein the inlet opening of the suction tube is arranged elsewhere in the tank.

The inlet opening 11 of the suction tube 3 is preferably also arranged inside the space 63.

The filter member 5 and preferably also the suction tube 3 extend basically parallel to the gas bubble ascension direction B, as mentioned before.

In order to fixate the arrangement 1 to the system 53, the system 53 is provided with a counter connection port 65. Said counter connection port 65 may be the end of a system-sided suction tube 67 which may be connected to a pump (not shown). The system-sided suction tube 67 is preferably made from steel.

A sealing ring 69 may be present on an outside of the system-sided suction tube 67. When the arrangement 1 is installed in the system 53, the sealing ring 69 is arranged inside the connection port 51, thereby forming a gas-tight connection between the suction tube 3 and the system-sided suction tube 67.

Preferably, the fluid tank system 53 further comprises at least one fluid sensor arrangement 71. The fluid sensor arrangement 71 may be provided with a quality sensor and/or with a liquid level sensor. The fluid sensor arrangement 71 is preferably arranged at the lower end of a sensor tube 73 which mounts the sensor arrangement 71 and which provides an inner space 75 for power and/or data lines for the sensor arrangement 71.

Preferably, the suction tube filter arrangement 1 is arranged side-by-side to the fluid sensor arrangement 71. Thereby, the properties measured by the sensor arrangement 71 reflect the properties of the solution 57 entering the filter member 5 and thereby the suction tube 3.

The sensor arrangement 71 has a bottom plate 77 onto which sensor components are mounted. The bottom plate is preferably arranged at the lower side 79 of the system 53. Thereby, the term "lower side" refers to the side of the system 53 that is aligned towards the gravitational direction G. The bottom plate 77 basically closes the space 63. The bottom plate 77 is preferably provided with a cutout 81 for the arrangement 1. In particular the lower end 15 of the filter member 5 may be arranged in the cutout 81. Due to this arrangement, the inlet opening 11 may be basically on a level with the sensor arrangement 71 along the suction tube direction S.

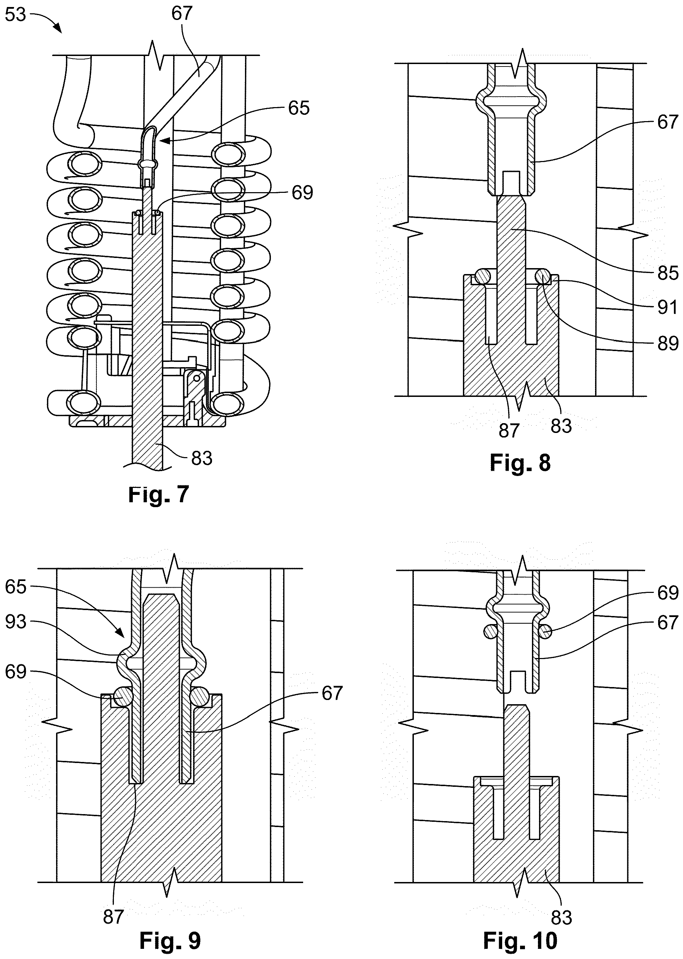

In the following, mounting of a sealing ring 69 onto the system-sided suction tube 67, in particular onto the counter connection port 65, is briefly described with reference to Figs. 7 to 10.

The fluid tank system 53 may comprise a jig 83 for mounting a sealing ring 69 on the system-sided suction tube 67. The jig 83 may be provided with an insertion portion 85 for insertion into the system-sided suction tube 67. By inserting the insertion portion 85 into the tube 67, the jig 83 is pre-aligned. During further insertion of the insertion portion 85, the tube 67 is guided into a receiving groove 87 of the jig 83 which circumferentially surrounds the insertion portion 85.

The receiving groove 87 itself is circumferentially surrounded by a sealing ring holding ridge 89 onto which a sealing ring 69 may be placed. In order to prevent the sealing ring 69 from moving during mounting of the same, the sealing ring holding ridge 89 is bordered by a holding ring 91.

When the tube 67 enters the receiving groove 87, the sealing ring 69 is placed on the tube 67. The depth of the groove 87 may define the position of the sealing ring 69 on the tube 67 in the longitudinal direction of the tube 67.

The tube 67 may be provided with a bulge 93 that extends circumferentially around the tube 67, forming a flange-like shape. Said bulge 93 can be used for mounting the suction tube filter arrangement 1 on the system-sided suction tube 67. Thereby, the bulge 93 forms a part of the counter connection port 65. The bulge 93 may also be used for defining the position of the sealing ring 69. When the sealing ring 69 has reached its final position, the jig 83 may be removed. The sealing thing 69 will stay on its position on the tube 67. Afterwards, the suction tube filter arrangement 1 can be connected on the system-sided suction tube 67.

### Reference Signs

- 1: Suction tube filter arrangement
- 3: Suction tube
- 5: Filter member
- 7: Suction end
- 9: Connection end
- 11: Inlet opening
- 13: Inner volume
- 15: Lower end of filter member
- 17: Material of filter member
- 19: Vertical strands
- 21: Horizontal strand
- 23: Bottom of the filter member
- 25: Fabric
- 27: Support structure
- 29: Opposing sections
- 31: Width
- 33: Depth
- 35: Diameter of suction tube
- 37: Thickness of material
- 39: Seam
- 41: Part of material
- 43: Part of material
- 45: Fixation means
- 47: Flange
- 49: Groove
- 51: Connection port
- 53: Fluid tank system
- 55: Fluid tank
- 57: Solution
- 59: Heating coil
- 61: Helical structure
- 63: Space
- 65: Counter connection port
- 67: System-sided suction tube
- 69: Sealing ring
- 71: Fluid sensor arrangement
- 73: Sensor tube
- 75: Inner space
- 77: Bottom plate
- 79: Lower side
- 81: Cutout
- 83: Jig
- 85: Insertion portion
- 87: Receiving groove
- 89: Sealing ring holding ridge
- 91: holding ring
- 93: bulge

- B: Gas bubble ascension
- D: Depth direction
- G: Gravitational direction
- L: Longitudinal direction
- S: Suction tube direction
- W: Width direction

## Claims

1. Suction tube filter arrangement (1) for a fluid tank (55), in particular for a fluid tank (55) containing urea solution (57), the arrangement (1) comprising at least one suction tube (3) which defines a suction tube direction (S), and at least one filter member (5), wherein the suction tube (3) is at least partially arranged inside the filter member (5), wherein the filter member (5) extends along the suction tube direction (S), wherein the at least one suction tube (3) forms a support structure (27) for the at least one filter member (5), the filter member (5) being expanded by the suction tube (3), wherein the filter member (5) without suction tube (3) is a flat body that gets expanded by the suction tube (3), forming an overall lens-shaped cross section perpendicular to a longitudinal direction (L), the longitudinal direction being defined by the suction tube direction (S), wherein the at least one suction tube (3) is provided with at least one monolithically integrated fixation means (45) for undetachably fixating the filter member (5) on the suction tube (3) and with at least one connection port (51) for connecting the arrangement (1) with a counter connection port (65) of a fluid tank system (53), and wherein the suction tube (3) together with the at least one monolithically integrated fixation means (45) and the at least one connection port (51) is formed as a single piece from a plastic material.

2. Suction tube filter arrangement (1) according to claim 1, wherein the at least one fixation means (45) is formed as a flange (47) on the suction tube (3) to which the at least one filter member (5) is attachable.

3. Suction tube filter arrangement (1) according to claim 1 or 2, wherein the at least one filter member (5) is made from fabric.

4. Suction tube filter arrangement (1) according to any of claims 1 to 3, wherein an inlet port (11) of the suction tube (3) is arranged at a bottom (23) of the filter member (5).

5. Fluid tank system (53), in particular for urea solution (57), wherein the system (53) comprises at least one heating coil (59) and at least one suction tube filter arrangement (1) according to any of claims 1 to 4, wherein at least a part of the suction tube filter arrangement (1) is arranged inside a space (63) which is surrounded by the at least one heating coil (59).

6. Fluid tank system (53) according to claim 5, wherein an inlet port (11) of the at least one suction tube (3) is arranged inside the space (63) which is surrounded by the at least one heating coil (59).

7. Fluid tank system (53) according to claim 5 or 6, wherein the at least one filter member (5) extends basically parallel with a gas-bubble ascension direction (B).

8. Fluid tank system (53) according to any of claims 5 to 7, wherein the system (53) further comprises at least one counter connection port (65) to which the suction tube filter arrangement (1) can be undetachably connected.

9. Fluid tank system (53) according to any of claims 5 to 8, wherein the system (53) further comprises at least one fluid sensor arrangement (71), and wherein the suction tube filter arrangement (1) is arranged side-by-side to the at least one fluid sensor arrangement (71).

10. Fluid tank system (53) according to claim 9, wherein the at least one fluid sensor arrangement (71) is provided with a bottom plate (77) that basically closes the space (63) which is surrounded by the at least one heating coil (59), and wherein the bottom plate (77) is provided with at least one cutout (81) for the at least one suction tube filter arrangement (1).

11. Fluid tank system (53) according to any of claims 5 to 10, wherein the system (53) comprises a set of interchangeable suction tube filter arrangements (1) having different lengths.

## Patentansprüche

1. Saugrohr-Filteranordnung (1) für einen Fluidtank (55), insbesondere für einen Harnstofflösung (57) enthaltenden Fluidtank (55), wobei die Anordnung (1) wenigstens ein Saugrohr (3), das eine Saugrohr-Richtung (S) definiert, sowie wenigstens ein Filterelement (5) umfasst, das Saugrohr (3) wenigstens teilweise im Inneren des Filterelementes (5) angeordnet ist, sich das Filterelement (5) in der Saugrohr-Richtung (S) erstreckt, das wenigstens eine Saugrohr (3) eine Tragestruktur (27) für das wenigstens eine Filterelement (5) bildet, das Filterelement (5) durch das Saugrohr (3) aufgeweitet wird, das Filterelement (5) ohne Saugrohr (3) ein flacher Körper ist, der durch das Saugrohr (3) aufgeweitet wird und einen linsenförmigen Gesamtquerschnitt senkrecht zu einer Längsrichtung (L) bildet, wobei die Längsrichtung durch die Saugrohr-Richtung (S) definiert wird, das wenigstens eine Saugrohr (3) mit wenigstens einer monolithisch integrierten Befestigungseinrichtung (45) zum unlösbaren Befestigen des Filterelementes (5) an dem Saugrohr (3) sowie mit wenigstens einem Verbindungsanschluss (51) zum Verbinden der Anordnung (1) mit einem Gegen-Verbindungsanschluss (65) eines Fluidtank-Systems (53) versehen ist und das Saugrohr (3) zusammen mit der wenigstens einen monolithisch integrierten Befestigungseinrichtung (45) und dem wenigstens einen Verbindungsanschluss (51) als ein Stück aus einem Kunststoffmaterial ausgebildet ist.

2. Saugrohr-Filteranordnung (1) nach Anspruch 1, wobei die wenigstens eine Befestigungseinrichtung (45) als ein Flansch (47) an dem Saugrohr (3) ausgebildet ist, an dem das wenigstens eine Filterelement (5) angebracht werden kann.

3. Saugrohr-Filteranordnung (1) nach Anspruch 1 oder 2, wobei das wenigstens eine Filterelement (5) aus Gewebe besteht.

4. Saugrohr-Filteranordnung (1) nach einem der Ansprüche 1 bis 3, wobei ein Einlassanschluss (11) des Saugrohrs (3) an einem Unterteil (23) des Filterelementes (5) angeordnet ist.

5. Fluidtank-System (53), insbesondere für Harnstofflösung (57), wobei das System (53) wenigstens eine Heizschlange (59) sowie wenigstens eine Saugrohr-Filteranordnung (1) nach einem der Ansprüche 1 bis 4 umfasst, und wenigstens ein Teil der Saugrohr-Filteranordnung (1) im Inneren eines Raums (63) angeordnet ist, der von der wenigstens einen Heizschlange (59) umgeben ist.

6. Fluidtank-System (53) nach Anspruch 5, wobei ein Einlassanschluss (11) des wenigstens einen Saugrohrs (3) im Inneren des Raums (63) angeordnet ist, der von der wenigstens einen Heizschlange (59) umgeben ist.

7. Fluidtank-System (53) nach Anspruch 5 oder 6, wobei sich das wenigstens eine Filterelement (5) im Wesentlichen parallel zu einer Aufstiegsrichtung (B) von Gasblasen erstreckt.

8. Fluidtank-System (53) nach einem der Ansprüche 5 bis 7, wobei das System (53) des Weiteren wenigstens einen Gegen-Verbindungsanschluss (65) umfasst, mit dem die Saugrohr-Filteranordnung (1) unlösbar verbunden werden kann.

9. Fluidtank-System (53) nach einem der Ansprüche 5 bis 8, wobei das System (53) des Weiteren wenigstens eine Fluidsensor-Anordnung (71) umfasst und die Saugrohr-Filteranordnung (1) neben der wenigstens einen Fluidsensor-Anordnung (71) angeordnet ist.

10. Fluidtank-System (53) nach Anspruch 9, wobei die wenigstens eine Fluidsensor-Anordnung (71) mit einer Bodenplatte (77) versehen ist, die den von der wenigstens einen Heizschlange (59) umgebenen Raum (63) im Wesentlichen verschließt, und die Bodenplatte (77) mit wenigstens einem Ausschnitt (81) für die wenigstens eine Saugrohr-Filteranordnung (1) versehen ist.

11. Fluidtank-System (53) nach einem der Ansprüche 5 bis 10, wobei das System (53) einen Satz austauschbarer Saugrohr-Filteranordnungen (1) mit unterschiedlichen Längen umfasst.

## Revendications

1. Dispositif de filtrage de tube d'aspiration (1) destiné à un réservoir de fluide (55), en particulier un réservoir de fluide (55) contenant une solution d'urée (57), le dispositif (1) comprenant au moins un tube d'aspiration (3) qui définit une direction de tube d'aspiration (S), et au moins un élément de filtrage (5), le tube d'aspiration (3) étant au moins partiellement disposé à l'intérieur de l'élément de filtrage (5), l'élément de filtrage (5) se déployant le long de la direction de tube d'aspiration (S), le ou les tubes d'aspiration (3) formant une structure de support (27) pour le ou les éléments de filtrage (5), l'élément de filtrage (5) étant dilaté par le tube d'aspiration (3), l'élément de filtrage (5) sans tube d'aspiration (3) étant un corps plat qui est dilaté par le tube d'aspiration (3), en formant une section transversale globale en forme de lentille perpendiculaire à une direction longitudinale (L), la direction longitudinale étant définie par la direction de tube d'aspiration (S), le ou les tubes d'aspiration (3) étant munis d'au moins un moyen de fixation intégré d'un seul tenant (45) destiné à fixer sans pouvoir le détacher l'élément de filtrage (5) sur le tube d'aspiration (3) et avec au moins un orifice de connexion (51) permettant de relier le dispositif (1) à un orifice de connexion à un compteur (65) d'un système de réservoir de fluide (53), et où le tube d'aspiration (3) avec le ou les moyens de fixation intégrés d'un seul tenant (45) et le ou les orifices de connexion (51) sont formés comme une pièce unique à partir d'un matériau plastique.

2. Dispositif de filtrage de tube d'aspiration (1) selon la revendication 1, dans lequel le ou les moyens de fixation (45) sont façonnés sous la forme d'une collerette (47) sur le tube d'aspiration (3) auquel peuvent être fixés le ou les éléments de filtrage (5).

3. Dispositif de filtrage de tube d'aspiration (1) selon la revendication 1 ou la revendication 2, dans lequel le ou les éléments de filtrage (5) sont constitués à partir de tissu.

4. Dispositif de filtrage de tube d'aspiration (1) selon l'une quelconque des revendications 1 à 3, dans lequel l'orifice d'entrée (11) du tube d'aspiration (3) est disposé au fond (23) de l'élément de filtrage (5).

5. Système de réservoir de fluide (53), en particulier pour une solution d'urée (57), le système (53) comprenant au moins une bobine de chauffage (59) et au moins un dispositif de filtrage de tube d'aspiration (1) conforme à l'une quelconque des revendications 1 à 4, dans lequel au moins une partie du dispositif de filtrage de tube d'aspiration (1) est disposée à l'intérieur d'un espace (63) qui est entouré par la ou les bobines de chauffage (59).

6. Système de réservoir de fluide (53) selon la revendication 5, dans lequel un orifice d'entrée (11) du ou des tubes d'aspiration (3) est disposé à l'intérieur de l'espace (63) qui est entouré par la ou les bobines de chauffage (59).

7. Système de réservoir de fluide (53) selon la revendication 5 ou la revendication 6, dans lequel le ou les éléments de filtrage (5) se déploient globalement parallèlement à une direction d'ascension de bulles de gaz (B) .

8. Système de réservoir de fluide (53) selon l'une quelconque des revendications 5 à 7, où le système (53) comprend en outre au moins un orifice de connexion à un compteur (65) auquel peut être fixé sans pouvoir se détacher le dispositif de filtrage de tube d'aspiration (1).

9. Système de réservoir de fluide (53) selon l'une quelconque des revendications 5 à 8, où le système (53) comprend en outre au moins un dispositif de capteur de fluide (71), et où le dispositif de filtrage de tube d'aspiration (1) est disposé côte à côte à ce ou à ces dispositifs de capteurs de fluide (71).

10. Système de réservoir de fluide (53) selon la revendication 9, dans lequel le ou les dispositifs de capteurs de fluide (71) sont munis d'une plaque de fond (77) qui ferme globalement l'espace (63) qui est entouré par la ou les bobines de chauffage (59), et où la plaque de fond (77) est munie d'au moins une découpe (81) destinée à ce ou ces dispositifs de filtrage de tubes d'aspiration (1).

11. Système de réservoir de fluide (53) selon l'une quelconque des revendications 5 à 10, où le système (53) comprend un ensemble de dispositifs de filtrage de tubes d'aspiration (1) interchangeables présentant différentes longueurs.
